# EUROPÄISCHE PATENTSCHRIFT

(11) **EP 2 207 937 B1**
(45) Veröffentlichungstag und Bekanntmachung des Hinweises auf die Patenterteilung: **19.03.2014**
(21) Anmeldenummer: 08848121.3
(22) Anmeldetag: 06.11.2008
(51) Int. Cl.: E03C 1/05, G01S 17/02

(54) **VERFAHREN UND ANORDNUNG ZUR IDENTIFIKATION VON SZENEN IN EINEM ERFASSUNGSRAUM**
METHOD AND SYSTEM FOR IDENTIFYING SCENES IN A COVERAGE AREA
PROCÉDÉ ET SYSTÈME POUR IDENTIFIER DES SCÈNES DANS UN ESPACE DE DÉTECTION

(30) Priorität: 06.11.2007 DE 102007052700
(43) Veröffentlichungstag der Anmeldung: 21.07.2010
(73) Patentinhaber: Micas Ag, 09376 Oelsnitz/Erzgebirge (DE)
(72) Erfinder: EBERT, Mark, 09376 Oelsnitz (DE); NORKUS, Volkmar, 01705 Pesterwitz (DE)
(74) Vertreter: Steiniger, Carmen
(86) Internationale Anmeldenummer: PCT/DE2008/001811
(87) Internationale Veröffentlichungsnummer: WO 2009/059587

(56) Entgegenhaltungen:
- EP-A- 0 617 175
- EP-A- 1 324 071
- EP-A2- 1 324 071
- WO-A1-99/62121
- DE-A1- 19 721 105
- DE-A1- 19 744 319
- US-A- 5 978 401
- US-A1- 2007 094 787
- US-B1- 6 211 787
- US-B1- 6 250 601
- US-B1- 6 393 634
- LIU Y ET AL: "Chip-scale integration of VCSEL, photodetector, and microlens arrays", PROCEEDINGS OF SPIE - INTERNATIONAL SOCIETY FOR OPTICAL ENGINEERING, S P I E - INTERNATIONAL SOCIETY FOR OPTICAL ENGINEERING, US, vol. 4652, 1 January 2002 (2002-01-01), pages 11-18, XP002341088, ISSN: 0277-786X, DOI: 10.1117/12.469564

## Beschreibung

Die Erfindung betrifft ein Verfahren und eine Anordnung zur Identifikation von Szenen in einem Erfassungsraum mittels infraroter Strahlung, vorzugsweise zur Verwendung als Infrarot-Näherungsschalter zur automatischen Steuerung des Wasserflusses in Waschtisch-Armaturen. Das Verfahren ermöglicht eine orts- und zeitaufgelöste Erfassung dieser Szenen, wodurch es besonders für alle Näherungsschalter geeignet ist, die unter erschwerten Bedingungen sicher schalten müssen.

Aktiv-Infrarot-Systeme zur Erkennung von ruhenden oder bewegten Objekten in einem bestimmten Erfassungsraum sind hinreichend bekannt. Beispiele hierfür sind Infrarot-Näherungschalter, wie sie in Waschtischarmaturen und Handtrocknem häufig eingesetzt werden, und Infrarot-Lichtschranken bzw. -Vorhänge, die vorwiegend in der Sicherungstechnik verwendet werden.

Bei Infrarot-Näherungsschaltern sind ein Infrarot-Sender und ein Infrarot-Empfänger in der Regel dicht nebeneinander angeordnet und erfassen optisch entsprechend ihrem Öffnungswinkel einen bestimmten Raumbereich. Von dem Infrarotsender wird eine modulierte Strahlung in diesen Raumbereich ausgesandt. Befindet sich ein Objekt in diesem Bereich, wird die Strahlung von der Objektoberfläche reflektiert und trifft auf den Empfänger, der ein entsprechendes Ausgangssignal erzeugt. Ändert sich die Szene im Erfassungsbereich der Bauelemente, weil sich das Objekt bewegt (Größen und/oder Emissionsgradänderung) oder neue Objekte hinzukommen, führt dies zu einer Änderung des Signalpegels am Ausgang des Empfängers. Die Signaländerung wird zur Auslösung von Schalt- bzw. Steuerimpulsen genutzt.

Ein Nachteil solcher Systeme besteht darin, dass sie integral über den gesamten Erfassungsraum messen. Infolgedessen ist die Identifizierung einer Szene, d. h., die ortsaufgelöste Erkennung von Objekten und deren zeitliche Veränderung im Erfassungsraum kaum möglich.

Insbesondere beim Einsatz von Infrarot-Näherungsschaltern zur automatischen Steuerung des Wasserflusses in Waschtischarmaturen ist es vorteilhaft, wiederkehrende Szenen eindeutig zu identifizieren, um den Wasserfluss sicher und zuverlässig zu steuern. Bei dieser Anwendung ist der Näherungsschalter vorwiegend in der Armatur untergebracht. Die in einem Abstand von ca. 15-45 cm vom Näherungsschalter in der Armatur stattfindende Szene ist gekennzeichnet durch eine zeitlich konstante Szene, die durch das Waschbecken, Teile der Armatur und den Hintergrund gebildet wird, und eine zeitlich sich ändernde Szene, die durch den Oberkörper einer Person am Waschbecken, die Hände unter dem Wasserauslauf und dem einsetzenden Wasserstrahl hervorgerufen wird. Der einsetzende Wasserstrahl kann in Abhängigkeit vom verwendeten Perlator in seiner Geometrie und seiner inneren Struktur stark variieren.

Abhängig vom Design der Armatur kann der Strahl einen relativ kleinen Durchmesser (z. B. kleiner 20 mm) bei relativ dichter innerer Struktur oder eine schwallartige bzw. brauseartige Form mit großer Breite (z. B. größer 50 mm) bei einer relativ transparenten inneren Struktur besitzen. Außerdem treten im Waschbecken und an Teilen der Armatur zusätzliche Reflexionen auf. Infolgedessen führen herkömmliche Infrarot-Näherungsschalter bei Armaturen mit großer Strahlbreite oder beim Einsatz von im nahen Infrarotbereich gut reflektierenden Beckenmaterialien häufig zu Fehlschaltungen. Herkömmliche Infrarot-Näherungsschalter sind folglich für derartige Anwendungen ungeeignet.

Aus dem Stand der Technik sind zahlreiche Lösungen zur Verringerung der Fehlschaltungen von optischen Sensoren und Infrarot-Näherungsschaltern bekannt.

In DE 197 44 319 A1 wird eine Vorrichtung zum Überwachen von Räumen gegen unbefugten Zutritt offenbart, die über eine Infrarot-Sendeeinrichtung, eine Infrarot-Empfangseinrichtung und eine Auswerteeinrichtung zum Vergleich des empfangenen Infrarotsignals mit einem Bezugssignal verfügt. Um zu erreichen, dass die Vorrichtung unempfindlich gegenüber Fremdstrahlung ist, weist die Vorrichtung Mittel zur Modulation des Infrarotsendesignals mit einer ersten Modulationsfrequenz und zur Modulation des empfangenen Infrarotsignals mit einer zweiten Modulationsfrequenz auf. In der Auswerteeinrichtung wird zur Erfassung der Laufzeit des modulierten Infrarotsignals die Phasendifferenz aus dem aus den ersten und zweiten Modulationsfrequenzen gemischten Bezugssignal und dem modulierten empfangenen Signal gebildet.

In EP 1 324 071 A2 wird ein Verfahren und eine Vorrichtung zur Erfassung von Objekten innerhalb eines Erfassungsbereiches angeregt, bei dem ein Infrarotlichtsignal von einem Sender emittiert und nach einer Reflexion an einem Objekt mittels eines Empfängers detektiert wird. Um Fehlinterpretationen zu vermeiden, werden nacheinander unterschiedliche Erfassungsbereiche durch eine Veränderung des emittierten und/oder detektieren Signalpegels überwacht.

Des Weiteren wird in DE 197 21 105 C2 ein optoelektronischer Sensor vorgestellt, der einen Lichtsender zum Aussenden eines Sendelichtbündels in einen Überwachungsbereich und einen Lichtempfänger zum Empfang des Empfangslichtbündels besitzt. Der Lichtempfänger besteht aus einem Mehrelement-Lichtsensor mit mindestens vier einzelnen Sensorelementen, die derart angeordnet sind, dass jeweils in Abhängigkeit vom Strahlwinkel unterschiedliche Sensorelemente vom Empfangslichtbündel beaufschlagt werden und die Auswerteeinheit Mittel umfasst, durch die die Sensorelemente des Mehrelement-Lichtsensors auf veränderliche Weise in Sensor-bereiche unterteilbar sind.

Diese og. Lösungen erhöhen zwar die Schaltsicherheit, für einen Einsatz zur automatischen Steuerung des Wasserflusses in Waschtischarmaturen ist die Schaltsicherheit, insbesondere bei der Verwendung von Perlatoren, die einen breiten Wasserstrahl verursachen sowie bei Waschbecken, die im Infrarotbereich stark reflektieren, nach wie vor zu gering.

Darüber hinaus ist es möglich, bildgebende optische Systeme einzusetzen und die Szene im Erfassungsraum mit Hilfe einer Bildverarbeitung zu identifizieren. Nachteilig im Vergleich zu IR-Näherungsschaltern sind hier jedoch der große Platzbedarf für das optische System, die benötigte hohe Rechenleistung, der große Strombedarf der Auswerteelektronik und die sowohl bei der Anschaffung als auch im Betrieb anfallenden erheblichen Kosten.

In der Druckschrift US 6,211,787 B1 wird ein Detektionssystem vorgeschlagen, welches beispielsweise in Krankenhäusern eine Möglichkeit schafft, Patienten beispielsweise auf der Toilette überwachen zu können, ohne deren Persönlichkeitsphäre zu stören, das heißt, ohne Kameras oder dergleichen einzusetzen. Beispielsweise kann eine Anordnung aus mehreren Abstandssensoren in einer Raumecke eines zu überwachenden Raumes vorgesehen werden. Dabei weist jeder der verwendeten Abstandssensoren sowohl einen Infrarotsender als auch einen Strahlungsempfänger auf. Jedem Infrarotsender ist konkret ein Strahlungsempfänger zugeordnet. Ferner wird in dieser Druckschrift vorgeschlagen, Infrarotsender in Form von LED's zu verwenden, welche einen sehr geringen Strahldurchmesser besitzen. Der Strahldurchmesser kann mittels einer optischen Linse beispielsweise der Größe des Körpers einer Person angepasst werden.

In der Druckschrift US 6,250,601 B1 sind Vorrichtungen beschrieben, mit welchen die Position und die Bewegung einer Person innerhalb von Nassräumen, wie Toiletten oder Bädern, detektiert werden können. Die vorgeschlagenen Vorrichtungen umfassen wenigstens zwei Sensoren, wobei jeder Sensor einen Empfänger aufweist. Ferner ist eine Steuerung vorgesehen, mit welcher die detektierten Signale von den Sensoren empfangen werden und welche ein Ausgangssignal in Reaktion auf die empfangenen Signale generiert. Ein Aktor, der das Ausgangssignal der Steuerung empfängt, ist mit dem Installationszubehör in dem Nassraum koppelbar und kann direkt in Reaktion auf das empfangene Signal geeignete Reaktionen auslösen.

Aus der Druckschrift US 2007/0094787 A1 ist eine Waschtischarmatur bekannt, bei welcher zwei Lichtschranken auf Infrarotbasis in einem Wasserhahn integriert sind. Die Signalemissionsrichtungen der beiden Lichtschranken sind nicht parallel, sondern kreuzen einander. Ferner ist eine Steuerung vorgesehen, welche in Abhängigkeit von der Größe der Intensität des von den jeweiligen Lichtschranken empfangenen Signal jeweils einen der beiden Infrarotemitter an- und den jeweils anderen ausschaltet.

Der Erfindung liegt die Aufgabe zugrunde, ein Verfahren zu finden, das es ermöglicht, mit einfachen Mitteln Szenen in Erfassungsräumen orts- bzw. zeitaufgelöst zu identifizieren und das ein sicheres Schalten beim Eintreten bestimmter Szenen garantiert. Das Verfahren soll für die automatische Steuerung des Wasserflusses in Waschtisch-Armaturen einsetzbar sein. Die Anordnung zur Durchführung des Verfahrens soll miniaturisierbar und kostengünstig sein.

Diese Aufgabe wird erfindungsgemäß durch die kennzeichnenden Merkmale der Ansprüche 1 und 7 gelöst; vorteilhafte Ausführungen und Verwendungen der Erfindung ergeben sich aus den Ansprüchen 2 bis 6 sowie 8 bis 11.

Beim erfindungsgemäßen Verfahren zur Identifizierung von Szenen in einem Erfassungsraum werden mehrere Infrarotsender mit Hilfe einer Ansteuereinheit einzeln angesteuert und infolgedessen geben die Infrarotsender Einzelsignale in Form von fokussierten schmalen Strahlenbündeln in den Erfassungsraum ab. Dabei ist es vorgesehen, die einzelnen Infrarotsender in einer zeitlichen Abfolge, die sich zyklisch wiederholt, vorzugsweise umlaufend anzusteuern. Die Zeit eines Umlaufs beträgt typischerweise 0,1 bis 2 Sekunden.

Die Projektionsflächen der Strahlenbündel sind so auf die Bildebenen fokussiert, dass sie die für die Identifikation von relevanten Szenen charakteristischen Flächen beleuchten. Ein Infrarotempfänger erfasst nahezu den gesamten von den Strahlenbündeln durchstrahlten Raum und empfängt die aus dem Raum zurückreflektierte infrarote Strahlung. Die hierdurch im Infrarotempfänger erzeugte Signalfolge wird in einem Speicher abgelegt. Mithilfe einer Auswerteeinrichtung wird die aktuelle Signalfolge entweder mit der Signalfolge einer statischen Grundszene oder einer zu einem früheren Zeitpunkt erfassten Referenzszene verglichen. Es ist aber auch ein Vergleich mit mehreren bereits erfassten Signalfolgen bzw. Referenzsignalfolgen möglich. Dabei werden immer diejenigen Einzelsignale der Signalfolgen miteinander verglichen, die demselben Infrarotsender zugeordnet sind.

Um den regelmäßig vorhandenen störenden Einfluss von infraroter Strahlung aus der Umgebung zu verringern, ist vorgesehen, dass die von den jeweiligen Infrarotsendern ausgesandten Einzelsignale moduliert sind. Mit einer auf diese Modulation abgestimmten Empfängereinheit, können im Empfänger ausgelöste Signale, die entweder der Infrarotstrahlung der Umgebung, die üblicherweise keine Modulation aufweist oder den modulierten Einzelsignalen zugeordnet sind, voneinander getrennt werden.

Die Anordnung zur Durchführung des Verfahrens weist mehrere, auf mindestens einem Substrat angeordnete Infrarotsender auf, die mit einer fokussierenden Optik ausgestattet sind, und besitzt mindestens einen, ebenfalls mit einer Optik versehenen Infrarotempfänger. In einer besonders vorteilhaften Variante sind sowohl die Infrarotsender als auch der Infrarotempfänger auf einem Substrat angeordnet.

Erfindungsgemäß sind die Infrarotsender mit einer Ansteuereinheit verbunden, mit der die Infrarotsender dem Verfahren entsprechend angesteuert werden. Der Infrarotempfänger ist mit einer Auswerteeinheit verbunden, die dem Vergleich der aktuell erfassten Signalfolge mit Referenzsignalfolgen dient.

Die Infrarotsender und die zugehörigen Optiken sind so angeordnet und die Optiken so gewählt, dass die Projektionsflächen der von den Infrarotsendern abgegebenen Strahlenbündeln derart in den Bildebenen liegen, dass sie für die Identifikation einer Szene charakteristische Flächen beleuchten. Der Infrarotempfänger und die zugehörige Optik sind so aufeinander abgestimmt, dass von dem Infrarotempfänger nahezu der gesamte von den Strahlenbündeln durchstrahlte Raum erfasst wird.

Die Infrarotsender sind als Leuchtdioden mit integrierten Linsen ausgeführt, die sich durch einen vergleichsweise kleinen Abstrahlwinkel auszeichnen.

Die örtliche Auflösung wird durch die räumlich begrenzte Abbildung (Projektionsflächen) der Infrarotsender im Erfassungsraum und ihre zeitlich nacheinander erfolgte Ansteuerung erreicht. Die zeitliche Auflösung wird durch die Umlauffrequenz bei der Ansteuerung der einzelnen Infrarotsender und ihrer Modulationsfrequenz bestimmt. Ändert sich die Szene im Erfassungsraum, d. h., reflektierte Strahlungssignale des jeweils angesteuerten Infrarotsenders ändern sich im Vergleich zu einer Grundszene oder zur vorangegangenen Signalfolge, wird das aus der Signaldifferenz zwischen den Umläufen deutlich. Durch die Synchronisation der Signalfolge mit der Ansteuerung der Infrarotsender ist es möglich, die Einzelnsignale, die jeweils demselben Infrarotsender zugeordnet sind, miteinander zu vergleichen. Auf diese Weise kann die Signaldifferenz zwischen Signalfolgen mindestens zweier Umläufe definierten Raumbereichen im Erfassungsraum zugeordnet und ggf. ein entsprechendes Schaltsignal ausgelöst werden.

Mit der Erfindung können orts- und zeitaufgelöst Szenen im Erfassungsraum aufgenommen und als Signalfolgen gespeichert werden. Damit ist es einerseits möglich, einen statischen Grundzustand im Erfassungsraum einzulernen, bei dem kein Schaltsignal ausgelöst werden soll. Andererseits können durch das Schaltsignal ausgelöste, örtlich begrenzte dynamische Prozesse (einsetzender Wasserstrahl in einem bestimmten Bereich des Erfassungsraumes) sicher erkannt und ausgeblendet bzw. speziell bearbeitet werden.

Eine besonders vorteilhafte Ausführungsform des erfindungsgemäßen Verfahrens wird dadurch erreicht, dass sich die Strahlenbündel mindestens zweier unterschiedlicher Infrarotsender in einem örtlich begrenzten Gebiet im Erfassungsraum schneiden. Wenn ein bewegtes Objekt in diesen Überlappungsbereich der Strahlenbündel eindringt, führt das bei ausreichend schnellen Umläufen dazu, dass in mindestens zwei optischen Kanälen innerhalb eines Umlaufes annähernd die gleiche relative Signaländerung auftritt. In Verbindung mit der festen geometrischen Anordnung der optischen Kanäle der einzelnen Infrarotsender besteht damit die Möglichkeit, dem Objekt einen Ort im Erfassungsraum zuzuordnen. Diese Ausführungsform des erfindungsgemäßen Verfahrens ermöglicht es, spezielle, örtlich begrenzte Schaltpunkte im Erfassungsraum zu definieren, die zur Steuerung des Gesamtsystems genutzt werden können (z. B. Scharfschaltung des Systems).

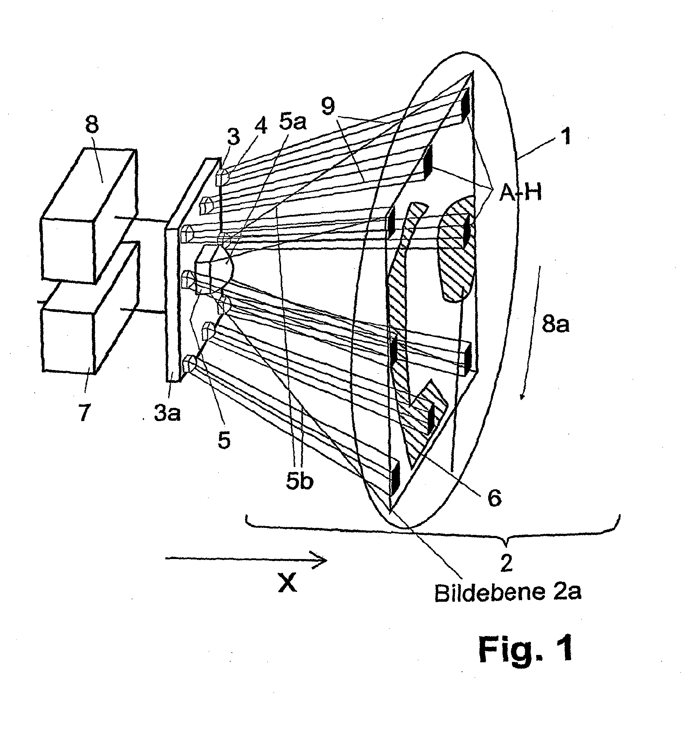

Die Erfindung wird nachfolgend anhand zweier Ausführungsbeispiele näher erläutert; wobei hierfür die schematischen und qualitativen Darstellungen gemäß Fig. 1 bis 12 verwendet werden.

In Fig. 1 ist die schematische Darstellung einer Infrarotsender- und Infrarotempfängerbaugruppe zur Durchführung des erfindungsgemäßen Verfahrens gezeigt. Auf dem Substrat 3a befinden sich mehrere miniaturisierte Infrarotsender 3 mit integrierter Optik 4 und Blende. Die Infrarotsender 3 besitzen eine definierte Abstrahlcharakteristik und erzeugen die Strahlungsbündel 9 im Erfassungsraum 2. Diese Strahlungsbündel 9 verursachen Projektionsflächen A-H in einer gedachten Bildebene 2a in einer variablen Entfernung x von den Infrarotsendern 3.

Gleichzeitig befindet sich auf dem Substrat 3a ein Infrarotempfänger 5 mit integrierter Optik 5a. Der Öffnungswinkel 5b des Infrarotempfängers 5 ist so gewählt, dass er nahezu den gesamten von den Strahlungsbündeln 9 durchstrahlten Raum erfasst (entspricht dem Erfassungsraum 2).

Über die Ansteuerelektronik 8 werden die Infrarotsender 3 nacheinander in einer gewählten Umlaufrichtung 8a mit einer Umlauffrequenz von einigen Umläufen pro Sekunde eingeschaltet. Während der Einschaltzeit eines jeden Infrarotsenders 3 wird dieser mit einer Pulsfolge aus kurzen Einzelimpulsen betrieben. In Abhängigkeit von der Szene 1 im Erfassungsraum 2, die durch Objekte 6 vor einem Hintergrund geprägt ist, wird die Strahlung einzelner Strahlungsbündel 9 in Richtung Strahlungsempfänger 5 reflektiert und erzeugt an seinem Ausgang eine Signalspannungsspannungsfolge.

In Abhängigkeit von einer gewählten Basisszene im Erfassungsraum 2 ergibt sich ein entsprechend zeitabhängiges Muster der Signalspannungen am Ausgang des Infrarotempfängers 3, das über eine angepasste Signalverarbeitung und Auswertesoftware abgespeichert und analysiert werden kann. Durch die Synchronisation der Auswerteeinrichtung 7 mit der Ansteuerung 8 der Infrarotsender 3 kann über den Zeitverlauf jedem Ausgangssignal ein bestimmter Ort in einer Bildebene 2a des Erfassungsraumes 2 zugeordnet werden.

Sollen nur ganz bestimmte Szenen 1 im Erfassungsraum 2 Schaltsignale auslösen, können diese in einem Teach-in-Verfahren eingelernt und als Signalfolgen abgespeichert werden. Diese Signalfolgen werden dann ständig mit den Signalfolgen beim realen Betrieb verglichen und lösen bei Übereinstimmung in einem vorgegebenen Streubereich ein Schaltsignal aus. Somit lassen sich mit einfachen Mitteln Szenen anhand einer zeitlichen Signalfolge ortsaufgelöst identifizieren. Ein weiterer Vorteil des Verfahrens ist, dass Erfassungsbereiche in der Bildebene 2a, die permanente Störungen bei der Signalverarbeitung hervorrufen, ausgeblendet werden können.

Im Folgenden wird das erfindungsgemäße Verfahren anhand seiner Anwendung zur Steuerung des Wasserflusses einer Wasserarmatur am Waschbecken beschrieben.

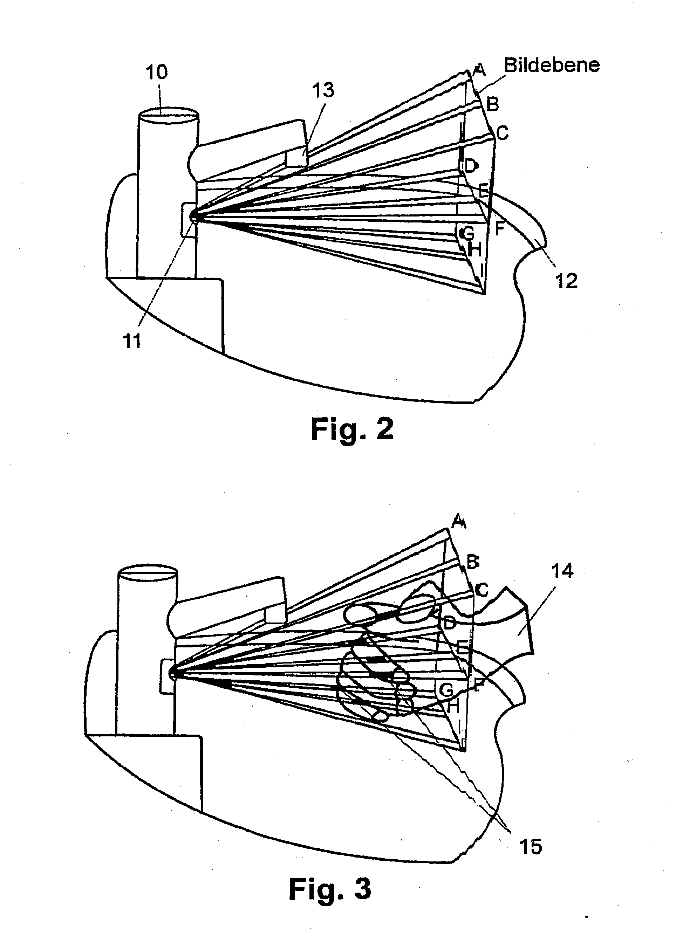

Fig. 2 zeigt die schematische Darstellung des Waschbeckens 12 und der Wasserarmatur 10 mit dem Wasserauslauf 13 sowie die räumliche Anordnung der von der Infrarotsender- und Infrarotempfängerbaugruppe 11 erzeugten einzelnen Strahlenbündel 9 im Erfassungsraum 2.

In Fig. 3 werden die entstehenden Projektionsflächen 15 einzelner Strahlenbündel 9 gezeigt, die auf der Hautoberfläche entstehen, wenn zwei Hände 14 in den Erfassungsraum 2 eingebracht werden. Von den Projektionsflächen 15 wird Infrarotstrahlung zur Infrarotsender- und Infrarotempfängerbaugruppe 11 reflektiert, die aufgrund der seriellen Ansteuerung der einzelnen Infrarotsender 3 zu einer Signalfolge am Ausgang des Infrarotempfängers 5 führt. Durch den Vergleich dieser Signalfolgen mit gespeicherten Signalfolgen wird ein Schaltsignal zur Auslösung des Wasserflusses erzeugt.

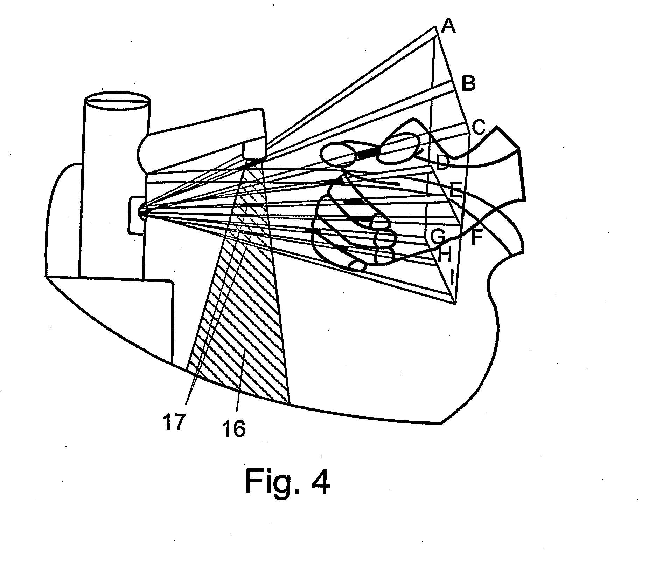

In Fig. 4 sind die entstehenden Projektionsflächen 17 auf der Oberfläche des ausgelösten Wasserstrahles 16 und die verbleibenden Projektionsflächen 15 auf der Handoberfläche dargestellt. Aufgrund der großen Signaldynamik, die durch reflektierte Strahlung im Bereich des Wasserstrahles erzeugt wird, ist ein sicherer Vergleich der nun pro Umlauf entstehenden Signalfolge mit gespeicherten Folgen sehr schwierig. Die Signaldynamik wird durch den verwendeten Perlator, den anliegenden Wasserdruck und den Abstand des Wasserstrahls 16 von der Infrarotsender- und Infrarotempfängerbaugruppe 11 bestimmt. Deshalb ist es sinnvoll, diese Projektionsflächen 17 bei der Signalauswertung auszublenden. Dies wird durch das erfindungsgemäße Verfahren ermöglicht:

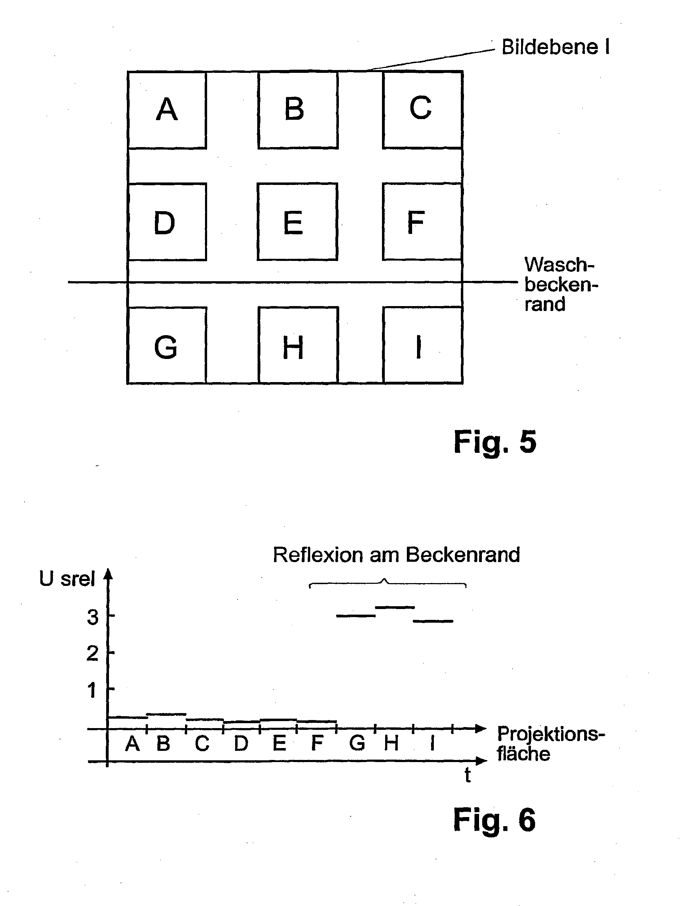

Fig. 5 zeigt die Lage der Projektionsflächen A-I der Infrarotsender 3 in einer Bildebene, die senkrecht auf einer gedachten optischen Achse der Infrarotsender- und Infrarotempfängerbaugruppe 11 steht und den Waschbeckenrand schneidet (vgl. Fig. 2).

In Fig. 6 sind qualitativ die relative Höhe und die zeitliche Abfolge der Signalpegel am Ausgang des Infrarotempfängers dargestellt, die durch reflektierte Strahlung der einzelnen Strahlenbündel 9 entstehen. Die Signale der Strahlenbündel G-I sind höher als die von den Strahlenbündeln A-F, da sie von der Waschbeckeninnenfläche in relativ geringer Entfernung reflektiert werden. Diese Signalfolge kann als Basisszene definiert werden, da sie nur von den konkreten Aufbauten und Umgebungsbedingungen im Erfassungsraum bestimmt wird und sich zeitlich kaum ändert.

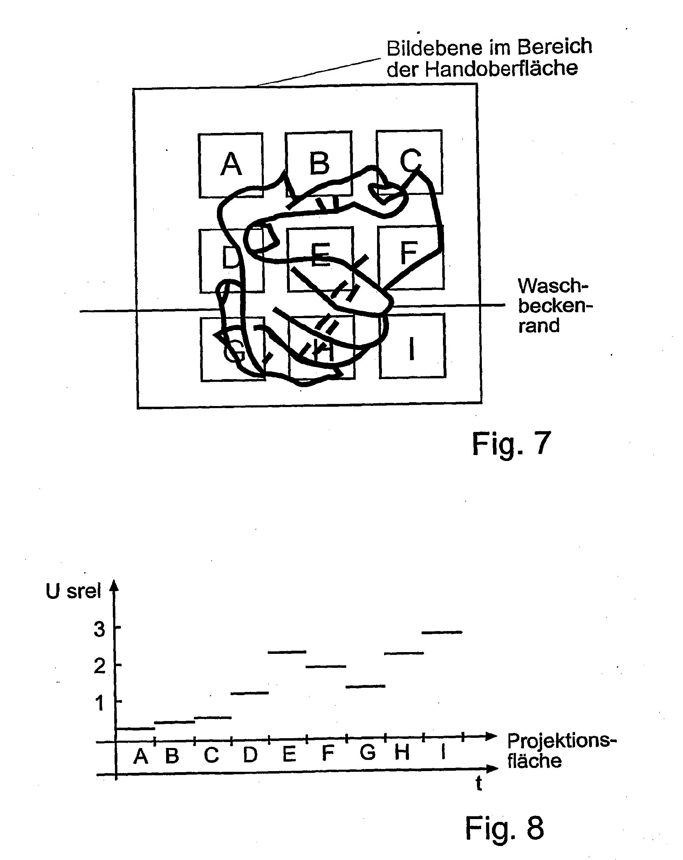

In Fig. 7 wird die Lage der Projektionsflächen A-I der Infrarotsender 3 in einer Bildebene im Bereich der Fingeroberfläche nach dem Einbringen von zwei Händen in den Erfassungsraum 2 gezeigt (vgl. Fig. 3). Fig. 8 zeigt qualitativ die nun entstehende Signalfolge am Ausgang des Infrarotempfängers 3. Die eindeutigen Änderungen der relativen Signalhöhe in den Bereichen C-H führen zu einem Auslösen des Wasserstrahles 16.

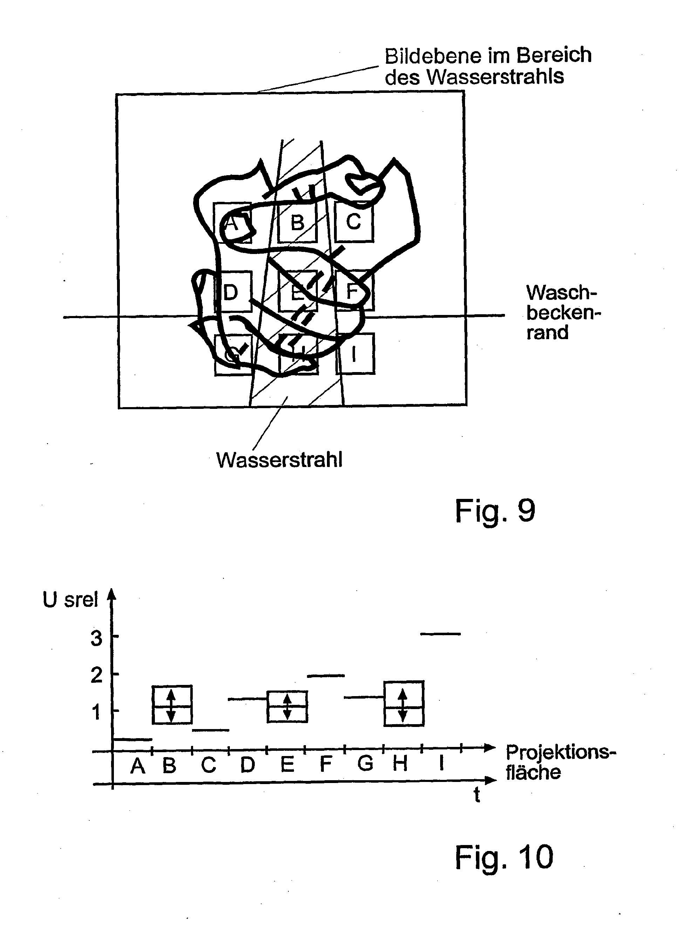

In Fig. 9 ist die Lage der Projektionsflächen A-I der Infrarotsender 3 in einer Bildebene im Bereich der Oberfläche des Wasserstrahls 16 und in Fig. 10 die Signalfolge am Ausgang des Infrarotempfängers 3 dargestellt. Die auf der Strahloberfläche liegenden Projektionsflächen B, E, H erzeugen bei mehreren Umläufen stark schwankende Signalpegel, sodass eine eindeutige Signalauswertung schwierig wird. Durch ein Ausblenden dieser Signale beim Vergleich mit der Basisszene bzw. der Szene vor der Wasserauslösung kann die Szene jedoch eindeutig identifiziert werden (vgl. Fig. 6, 8, 10).

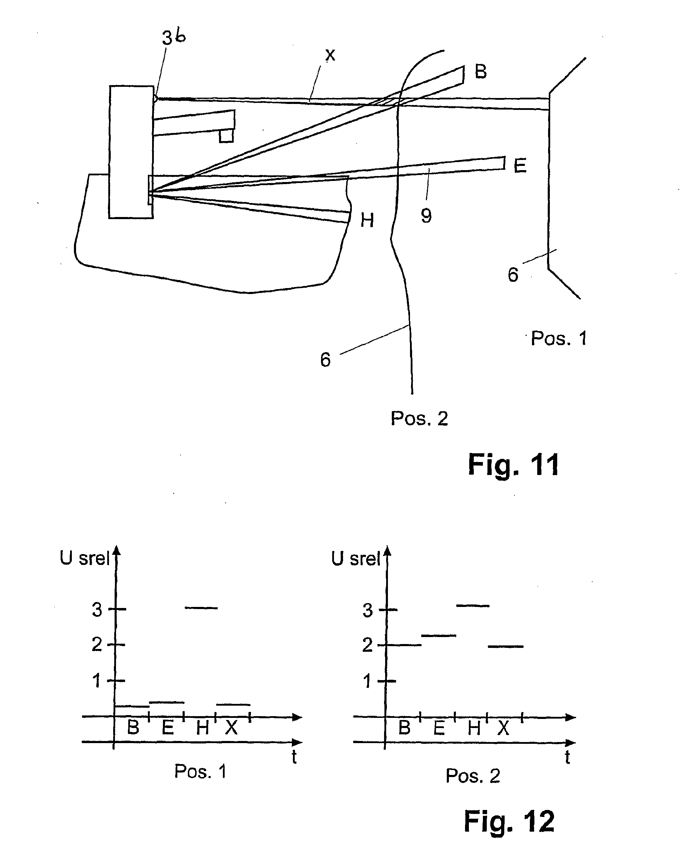

Fig. 11 zeigt die schematische Darstellung der Anwendung des erfindungsgemäßen Verfahrens mit sich kreuzenden Strahlenbündeln. Wenn sich das zu identifizierende Objekt 6 von einer ursprünglichen Position (Pos. 1) auf das Waschbecken zu bewegt, ergibt sich die in Fig. 12 dargestellte Signalfolge für die ausgewählten Strahlenbündel. Beim weiteren Annähern (Pos. 2) ergibt sich durch die Bestrahlung mit den Strahlenbündeln B und X annähernd das gleiche Ausgangssignal. Dieser Zustand kann bei entsprechender geometrischer Anordnung des zusätzlichen Infrarotsenders 3b zur Scharfschaltung des Systems bzw. als Entfernungsinformation genutzt werden.

### Liste der verwendeten Bezugszeichen

- 1: Szene
- 2: Erfassungsraum
- 2a: Bildebene
- 3: Infrarotsender
- 3a: Substrat
- 3b: zusätzlicher Infrarotsender
- 4: Optik des Infrarotsenders
- 5: Infrarotempfänger
- 5a: Optik des Infrarotempfängers
- 5b: Öffnungswinkel
- 6: Objek/Objekte/Person
- 7: Auswerteeinrichtung
- 8: Ansteuerung
- 8a: Umlaufrichtung
- 9: Strahlungsbündel
- 10: Wasserarmatur
- 11: Infrarotsender- und Infrarotempfängerbaugruppe
- 12: Waschbecken
- 13: Wasserauslauf
- 14: Hände
- 15: Projektionsflächen von Infrarotstrahlungsbündeln auf den Händen
- 16: Wasserstrahl
- 17: Projektionsflächen von Infrarotstrahlungsbündeln auf dem Wasserstrahl
- A-I: Projektionsflächen der Strahlungsbündel in einer gedachten Bildebene mit der variablen Entfernung x von den Infrarotsendern

## Patentansprüche

1. Verfahren zur Identifizierung von Szenen (1) in einem Erfassungsraum (2), bei dem mit Hilfe von mehreren mit einer Ansteuereinheit (8) betriebenen Infrarotsendern (3) jeweils von den einzelnen Infrarotsendern (3) Einzelsignale in Form von fokussierten schmalen Strahlenbündeln (9) im Erfassungsraum (2) erzeugt werden, wobei die Projektionsflächen (A-I) der Strahlenbündel (9) so in die Bildebenen gelegt werden, dass sie für die Identifikation einer Szene (1) charakteristische Flächen beleuchten, **dadurch gekennzeichnet, dass** mehrere Infrarotsender (3) auf einem Substrat (3a) angeordnet sind,
wobei sich gleichzeitig auf dem Substrat (3a) ein Infrarotempfänger (5) mit integrierter Optik (5a) befindet
wobei die Infrarotsender (3) als Leuchtdioden ausgeführt sind, die auf dem Substrat (3a) angeordneten Infrarotsender (3) mit einer fokussierenden Optik (4) ausgestattet sind, und wobei der Öffnungswinkel (5b) des Infrarotempfängers (5) so gewählt ist, dass der Infrarotempfänger (5) nahezu den gesamten von den Strahlenbündeln (9) durchstrahlten Raum, welcher dem Erfassungsraum (2) entspricht, erfasst und die aus dem Raum zurückreflektierte infrarote Strahlung empfängt, wobei die hierdurch am Infrarotempfänger (5) erzeugte Signalfolge in einem Speicher abgelegt und mit Hilfe einer Auswerteeinrichtung (7) entweder mit der Signalfolge einer statischen Grundszene oder mit einer zu einem früheren Zeitpunkt erfassten Signalfolge einer Referenzszene verglichen wird, wobei jeweils diejenigen Einzelsignale der aktuell erzeugten Signalfolge und der Referenzsignalfolge miteinander verglichen werden, die demselben Infrarotsender (3) zugeordnet ist, wodurch eine orts- und zeitaufgelöste Identifizierung der Szenen (1) ermöglicht wird.

2. Verfahren nach Anspruch 1, **dadurch gekennzeichnet, dass** die Infrarotsender (3) die Einzelsignale in einer sich zyklisch wiederholenden zeitlichen Abfolge erzeugen.

3. Verfahren nach Anspruch 2, **dadurch gekennzeichnet, dass** die Infrarotsender (3) zyklisch in umlaufender Reihenfolge Einzelsignale abgeben.

4. Verfahren nach Anspruch 3, **dadurch gekennzeichnet, dass** die Zeitdauer eines Umlaufs 0,1 bis 2 Sekunden beträgt.

5. Verfahren nach einem der Ansprüche 1 bis 4, **dadurch gekennzeichnet, dass** die von den Infrarotsendern (3) ausgesandten Einzelsignale moduliert sind, um den Einfluss von konstantem Infrarotlicht aus der Umgebung zu verringern.

6. Verfahren nach einem der Ansprüche 1 bis 5, **dadurch gekennzeichnet, dass** sich mindestens zwei der von den Infrarotsendern (3) erzeugten Strahlenbündel (9) im Erfassungsraum (2) schneiden.

7. Anordnung zur Durchführung des Verfahrens nach Anspruch 1, das mehrere Infrarotsender (3), die jeweils eine Optik (4) zur Strahlfokussierung besitzen, aufweist, und die Infrarotsender (3) mit einer Ansteuereinheit (8) verbunden sind, die dem Ansteuern der einzelnen Infrarotsender (3) dient, **dadurch gekennzeichnet, dass** mehrere Infrarotsender (3) auf einem Substrat (3a) angeordnet sind und,
wobei sich gleichzeitig auf dem Substrat (3a) ein Infrarotempfänger (5) mit integrierter Optik (5a) befindet,
wobei die Infrarotsender (3) als Leuchtdioden ausgeführt sind, die Infrarotsender (3) und der Infrarotempfänger (5) auf einem Substrat (3a) angeordnet sind, die auf dem Substrat (3a) angeordneten Infrarotsender (3) mit der fokussierenden Optik (4) ausgestattet sind und der Infrarotempfänger (5) mit einer Auswerteeinheit (7) verbunden ist, die die erfasste Signalfolge entweder mit der Signalfolge einer statischen Grundszene oder mit einer zu einem früheren Zeitpunkt erfassten Signalfolge einer Referenzszene vergleicht, wobei die Infrarotsender (3) und deren Optiken (4) so angeordnet sind, dass die Projektionsflächen (A-I) der von den Infrarotsendern (3) abgegebenen Strahlenbündel (9) so in den Bildebenen liegen, dass sie für die Identifikation einer Szene (1) in einem Erfassungsraum (2) charakteristische Flächen beleuchten, und der Infrarotempfänger (5) und die Optik (5a) so angeordnet und gewählt sind, dass von dem Infrarotempfänger (5) nahezu der gesamte von den Strahlenbündeln (9) durchstrahlte Raum, welcher dem Erfassungsraum (2) entspricht, erfasst wird.

8. Anordnung nach Anspruch 7, **dadurch gekennzeichnet, dass** die Infrarotsender (3) und der Infrarotempfänger (5) auf einem plattenförmigen Substrat (3a) befestigt sind.

9. Anordnung nach Anspruch 7, **dadurch gekennzeichnet, dass** sich ein Teil der Infrarotsender (3) auf einem Substrat befindet und mindestens ein Infrarotsender (3b) vom Substrat (3a) entfernt und derart zu den anderen Infrarotsendern (3) orientiert angeordnet ist, dass sich das von ihm ausgesandte Strahlenbündel (9) mit mindestens einem von einem anderen Infrarotsender (3) ausgesandten Strahlenbündel (9) schneidet.

10. Anordnung nach einem der Ansprüche 7 bis 9, **dadurch gekennzeichnet, dass** der Infrarotempfänger (5) eine auf eine Modulation der von den jeweiligen Infrarotsendern (3) ausgesandten Einzelsignale abgestimmte Empfängereinheit aufweist.

11. Anordnung nach einem der Ansprüche 7 bis 10, **dadurch gekennzeichnet, dass** die Anordnung ein Infrarot-Näherungsschalter ist, der in einer Waschtischarmatur untergebracht ist.

## Claims

1. Method for identifying scenes (1) in a detection space (2), in which, by means of a plurality of infrared transmitters (3) operated by a control unit (8), individual signals in the form of focused narrow beams (9) are generated in the detection space (2) by each of the individual infrared transmitters (3), the projection surfaces (A-I) of the beams (9) being placed into the image planes such that they illuminate characteristic areas for identifying a scene (1), **characterised in that** a plurality of infrared transmitters (3) are arranged on a substrate (3a), an infrared receiver (5) having an integrated optics (5a) being located simultaneously on the substrate (3a), the infrared transmitters (3) being designed as LEDs, the infrared transmitters (3) arranged on the substrate (3a) being equipped with a focusing optics (4), and the aperture angle (5b) of the infrared receiver (5) being selected such that the infrared receiver (5) detects almost the entire space irradiated by the beams (9), which corresponds to the detection space (2), and receives the infrared radiation reflected back from the space, the signal string generated thereby at the infrared receiver (5) being stored in a memory device and compared, by means of an evaluation device (7), with either the signal string of a static base scene or a signal string of a reference scene detected earlier, the individual signals from the currently generated signal string and the reference signal string, which is assigned to the same infrared transmitter (3), being compared with each other, thereby allowing scenes (1) to be identified in a time- and space-resolved manner.

2. Method according to claim 1, **characterised in that** the infrared transmitters (3) generate the individual signals in a cyclically repeating order.

3. Method according to claim 2, **characterised in that** the infrared transmitters (3) emit individual signals cyclically in a rotating sequence.

4. Method according to claim 3, **characterised in that** the duration of one rotation is from 0.1 to 2 seconds.

5. Method according to any of claims 1 to 4, **characterised in that** the individual signals sent out by the infrared transmitters (3) are modulated to reduce the influence of constant infrared light from the surroundings.

6. Method according to any of claims 1 to 5, **characterised in that** at least two of the beams (9) generated by the infrared transmitters (3) intersect in the detection space (2).

7. Arrangement for implementing the method according to claim 1, comprising a plurality of infrared transmitters (3) which each have an optics (4) for focusing a beam, and the infrared transmitters (3) are connected to an actuation unit (8) which actuates the individual infrared transmitters (3), **characterised in that** a plurality of infrared transmitters (3) are arranged on a substrate (3a), and an infrared receiver (5) having an integrated optics (5a) being located simultaneously on the substrate (3a), the infrared transmitters (3) being designed as LEDs, the infrared transmitters (3) and the infrared receiver (5) being arranged on a substrate (3a), the infrared transmitters (3) arranged on the substrate (3a) being equipped with the focusing optics (4), and the infrared receiver (5) being connected to an evaluation unit (7) which compares the detected signal sequence with either the signal string of a static base scene or a signal string of a reference scene detected earlier, the infrared transmitters (3) and the optics (4) thereof being arranged such that the projection areas (A-I) of the beams (9) emitted by the infrared transmitters (3) are positioned in the image planes such that they illuminate characteristic areas for identifying a scene (1) in a detection space (2), and the infrared receiver (5) and the optics (5a) being arranged and selected such that almost the entire space irradiated by the beams (9), which corresponds to the detection space (2), is detected by the infrared receiver (5).

8. Arrangement according to claim 7, **characterised in that** the infrared transmitters (3) and the infrared receiver (5) are fixed to a plate-shaped substrate (3a).

9. Arrangement according to claim 7, **characterised in that** some of the infrared transmitters (3) are located on a substrate and at least one infrared transmitter (3b) is separate from the substrate (3a) and oriented relative to the other infrared transmitters (3) such that the beam (9) sent out by said infrared transmitter intersects at least one beam (9) sent out by another infrared transmitter (3).

10. Arrangement according to any of claims 7 to 9, **characterised in that** the infrared receiver (5) comprises a receiver unit adapted to a modulation of the individual signals sent out by each of the infrared transmitters (3).

11. Arrangement according to any of claims 7 to 10, **characterised in that** the arrangement is an infrared proximity switch which is housed in a wash-basin fitting.

## Revendications

1. Procédé d'identification de scènes (1) dans un espace de détection (2), dans lequel, à l'aide de plusieurs émetteurs infrarouges (3) mis en oeuvre avec une unité de pilotage (8), des signaux individuels sont produits dans l'espace de détection (2) respectivement par les émetteurs infrarouges (3) individuels sous forme de faisceaux de rayons (9) étroits focalisés, les surfaces de projection (A-I) des faisceaux de rayons (9) étant placées dans les plans d'image de telle sorte qu'elles éclairent des surfaces caractéristiques pour l'identification d'une scène (1), **caractérisé en ce que** plusieurs émetteurs infrarouges (3) sont disposés sur un substrat (3a), un récepteur infrarouge (5) avec une optique (5a) intégrée étant situé simultanément sur le substrat (3a), les émetteurs infrarouges (3) étant réalisés en tant que diodes lumineuses, les émetteurs infrarouges (3) disposés sur le substrat (3a) étant équipés d'une optique (4) de focalisation, et l'angle d'ouverture (5b) du récepteur infrarouge (5) étant choisi de telle sorte que le récepteur infrarouge (5) détecte quasiment la totalité de l'espace balayé par les faisceaux de rayons (9) qui correspond à l'espace de détection (2) et reçoit le rayonnement infrarouge réfléchi à partir de l'espace, la séquence de signaux produite ainsi sur le récepteur infrarouge (5) étant enregistrée dans une mémoire et étant, à l'aide d'un dispositif d'analyse (7), comparée soit à la séquence de signaux d'une scène de base statique, soit à une séquence de signaux, détectée à un moment antérieur, d'une scène de référence, les signaux individuels de la séquence de signaux produite actuellement et de la séquence de signaux de référence qui est affectée au même émetteur infrarouge (3) étant respectivement comparés les uns aux autres, ce qui permet une identification de scènes (1) avec une résolution spatiale et temporelle.

2. Procédé selon la revendication 1, **caractérisé en ce que** les émetteurs infrarouges (3) produisent les signaux individuels dans une séquence temporelle à répétition cyclique.

3. Procédé selon la revendication 2, **caractérisé en ce que** les émetteurs infrarouges (3) délivrent de façon cyclique des signaux individuels dans une succession circulaire.

4. Procédé selon la revendication 3, **caractérisé en ce que** la durée d'une rotation est de 0,1 à 2 secondes.

5. Procédé selon une des revendications 1 à 4, **caractérisé en ce que** les signaux individuels émis par les émetteurs infrarouges (3) sont modulés pour réduire l'influence de la lumière infrarouge constante en provenance de l'environnement.

6. Procédé selon une des revendications 1 à 5, **caractérisé en ce qu'au** moins deux des faisceaux de rayons (9) produits par les émetteurs infrarouges (3) se croisent dans l'espace de détection (2).

7. Dispositif pour la réalisation du procédé selon la revendication 1 qui présente plusieurs émetteurs infrarouges (3) qui possèdent respectivement une optique (4) pour la focalisation du rayonnement, et les émetteurs infrarouges (3) sont connectés à une unité de pilotage (8) qui sert à piloter les émetteurs infrarouges (3) individuels, **caractérisé en ce que** plusieurs émetteurs infrarouges (3) sont disposés sur un substrat (3a), un récepteur infrarouge (5) avec une optique (5a) intégrée étant situé simultanément sur le substrat (3a), les émetteurs infrarouges (3) étant réalisés en tant que diodes lumineuses, les émetteurs infrarouges (3) et le récepteur infrarouge (5) étant disposés sur un substrat (3a), les émetteurs infrarouges (3) disposés sur le substrat (3a) étant équipés de l'optique (4) de focalisation, et le récepteur infrarouge (5) étant relié à une unité d'analyse (7) qui compare la séquence de signaux détectée soit à la séquence de signaux d'une scène de base statique, soit à une séquence de signaux, détectée à un moment antérieur, d'une scène de référence, les émetteurs infrarouges (3) et leurs optiques (4) étant disposés de telle sorte que les surfaces de projection (A-I) des faisceaux de rayons (9) délivrés par les émetteurs infrarouges (3) sont placées dans les plans d'image de telle sorte qu'elles éclairent des surfaces caractéristiques pour l'identification d'une scène (1) dans un espace de détection (2), et le récepteur infrarouge (5) et l'optique (5a) étant disposés et choisis de telle sorte que le récepteur infrarouge (5) détecte quasiment la totalité de l'espace balayé par les faisceaux de rayons (9) qui correspond à l'espace de détection (2).

8. Dispositif selon la revendication 7, **caractérisé en ce que** les émetteurs infrarouges (3) et le récepteur infrarouge (5) sont fixés sur un substrat (3a) en forme de plaque.

9. Dispositif selon la revendication 7, **caractérisé en ce qu'une** partie des émetteurs infrarouges (3) est située sur un substrat, et **en ce qu'**au moins un émetteur infrarouge (3b) est éloigné du substrat (3a) et est orienté par rapport aux autres émetteurs infrarouges (3) de telle sorte que le faisceau de rayons (9) émis par lui croise au moins un faisceau de rayons (9) émis par un autre émetteur infrarouge (3).

10. Dispositif selon une des revendications 7 à 9, **caractérisé en ce que** le récepteur infrarouge (5) présente une unité de réception accordée à une modulation des signaux individuels émis par les émetteurs infrarouges (3) respectifs.

11. Dispositif selon une des revendications 7 à 10, **caractérisé en ce que** le dispositif est un détecteur de proximité infrarouge qui est logé dans une robinetterie de lavabo.
